Europäisches Patentamt

**European Patent Office**

**Office européen des brevets**

(19)

(11) Numéro de publication: **0 017 576**
**B1**

(12) **FASCICULE DE BREVET EUROPEEN**

(45) Date de publication du fascicule du brevet: **14.12.83**   (51) Int. Cl.³: **B 60 S 1/28**

(21) Numéro de dépôt: **80400427.3**

(22) Date de dépôt: **31.03.80**

(54) **Essuie-glace double pour véhicule.**

(30) Priorité: **29.03.79 FR 7907917**

(43) Date de publication de la demande:
**15.10.80 Bulletin 80/21**

(45) Mention de la délivrance du brevet:
**14.12.83 Bulletin 83/50**

(84) Etats contractants désignés:
**AT BE CH DE GB IT LU NL SE**

(56) Documents cités:
**DE - A - 2 736 606**
**FR - A - 1 134 323**
**FR - A - 1 240 108**
**GB - A - 848 577**
**US - A - 2 288 652**
**US - A - 2 324 894**

(73) Titulaire: **Morette, Jacques**
**Normandie, B 17, rue Victor Boucher**
**F-76420 Bihorel (FR)**

(72) Inventeur: **Morette, Jacques**
**Normandie, B 17, rue Victor Boucher**
**F-76420 Bihorel (FR)**

(74) Mandataire: **Chenard, René Marcel**
**Cabinet BUGNION ASSOCIES 116, boulevard**
**Haussmann**
**F-75008 Paris (FR)**

Courier Press, Leamington Spa, England.

**0 017 576**

### Essuie-glace double pour véhicule

L'invention concerne un nouvel essuie-glace pour véhicule et plus particulièrement un essuie-glace double.

Les essuie-glaces des véhicules sont souvent d'une efficacité médiocre et plus particulièrement sur les véhicules dont le pare-brise n'est équipé que d'un seul essuie-glace, articulé sensiblement au milieu de la base du pare-brise.

Le passage d'un balai ou raclette, de manière alternée, est souvent insuffisant en cas de pluie violente ou de projection de boue. C'est pourquoi il a été imaginé de monter sur le bras d'un essuie-glace classique deux raclettes côte à côté, dans le but d'assurer un essuyage double. Toutefois, cette disposition n'apporte pas les résultats attendus. En effet, la force du bras, exercée par son ressort d'application entraine, en théorie, une pression de chaque raclette sensiblement égale à la moitié de celle qu'elle aurait eue, si elle était seule. En outre, il est difficile d'obtenir, un moyen de fixation qui permette une bonne application des deux raclettes en même temps et les risques sont importants d'avoir, en fait, une raclette qui porte mal ou dont la pression est inférieure à celle de l'autre, entrainant ainsi son inutilité.

Par ailleurs, il est connu, par le brevet FR—A—1 134 323, de constituer un système d'essuie-glace double pour véhicule, à deux bras distincts munis chacun de son propre moyen de pression et d'un balai ou raclette assujetti sur son extrémité libre, comportant des moyens d'accouplement destinés à permettre de fixer solidairement l'une au-dessus de l'autre les extrémités de fixation portant des moyens de pression des deux bras, sur le même axe d'entrainement dépendant du véhicule. Cependant, le résultat recherché dans ce brevet est uniquement constitué par une augmentation de la surface balayée, les deux bras étant, à cet effet, aménagés de façon très divergente voisine de 90°.

Par ailleurs encore, il est connu, par le brevet FR—A—1 240 108, de constituer un essuie-glace double pour véhicules, présentant deux bras parallèles sur toute leur longueur et munis chacun d'une raclette et d'un moyen de pression indépendant de l'autre. Cependant, les deux bras sont, ici, juxtaposés de part et d'autre de l'axe d'entrainement, sur un support commun et, dans le cas de pare brises bombés, il en résulte des efforts anormaux de basculement qui se répercutent sur cet axe et nuisent à sa longévité, le seul palliatif imaginé par l'inventeur étant l'aménagement de deux axes respectivement affectés à chacun des bras.

Par rapport aux caractéristiques connues du FR—A—1134323, la présente invention est essentiellement caractérisée en ce que la forme des bras est telle que lesdites extrémités de fixation sont légèrement décalées l'une par rapport à l'autre et dans deux plans perpendiculaires, de manière telle que les raclettes se déplacent conjointement parallèlement l'une à l'autre, avec un écartement sensiblement constant.

Il est clair ainsi, que l'on obtient un véritable double essuyage, la disposition selon l'invention permet une bonne application de chaque raclette, indépendamment l'une de l'autre.

Un mode de réalisation préféré selon l'invention est remarquable en ce qu'en position de service, les extrémités de fixation font entre elles deux angles aigus selon un plan de projection contenant l'axe d'entrainement et respectivement un plan de projection perpendiculaire à celui-ci. Ainsi, les cambrures des bras sont telles que les extrémités pourvues de raclettes se confondent dans le plan de projection contenant ledit axe, tandis que l'axe longitudinal d'au moins l'un des bras présentant, dans le plan de projection perpendiculaire à l'axe d'entrainement, un léger coude vers l'autre bras, les dits bras sont sur une bonne partie de leur longueur, substantiellement parallèles dans le dit plan de projection.

Avantageusement, au moins une entretoise, de préférence souple, est disposée entre les deux bras et/ou les deux raclettes, de manière à assurer un écartement invariable.

De préférence, l'élément d'accouplement des bras est un prolongateur d'axe, disposé entre les deux extrémités de fixation des bras, de manière à permettre, notamment, l'adaptation d'un bras complémentaire sur le bras d'origine du véhicule à équiper.

Il est ainsi très simple d'adapter un essuie-glace selon l'invention, sur l'axe d'entrainement d'origine du véhicule, en se servant éventuellement du ou des essuie-glaces déjà existants.

Dans ce cas par exemple, le prolongateur d'axe présente à l'une de ses extrémités un taraudage destiné à être vissé en bout de l'axe d'entrainement, à la place de l'écrou d'origine, pour fixer le bras inférieur, tandis que l'autre extrémité est pourvue d'une portée conique cannelée et d'un filetage extérieur pour respectivement caler et fixer le bras supérieur de manière classique avec un écrou.

L'invention sera mieux comprise à la lecture de la description qui va suivre, d'un mode de réalisation selon l'invention et à l'étude du dessin annexé, dans lequel:

la figure 1 est une vue en élévation latérale contenant l'axe d'entrainement, d'un dispositif selon l'invention et

la figure 2 est une vue en plan, du dispositif de la figure 1, perpendiculaire audit axe.

L'essuie-glace représenté comporte deux bras 1 et 2, munis chacun d'un ressort de pression respectivement 4 et 3.

Chaque bras comporte une extrémité de fixation 1*a* et 2*a*, aménagée pour être fixée sur un axe d'entrainement classique 5.

Dans l'exemple représenté, l'extrémité de l'axe d'entrainement présente une portée conique

2

cannelée 5a et un filetage extérieur 5b; de manière à recevoir une patte de fixation 6 de l'extrémité 2a du bras 2, ladite patte 6 étant pourvue d'un ajour cannelé intérieurement, de manière à venir se caler sur la portée conique 5a sus-mentionnée.

Un prolongateur d'axe 7, qui présente une extrémité taraudée, est vissé sur l'extrémité filetée 5b de l'axe 5 pour fixer la patte 6 de l'extrémité 2a du bras 2.

Le prolongateur 7 est en outre pourvu à son autre extrémité, d'une portée conique cannelée 7a et d'un filetage extérieur 7b, pour permettre la fixation de la patte 8 de l'extrémité 1a du bras 1, de la même manière que celle qui vient d'être décrite pour la patte 6, au moyen toutefois d'un écrou 9 recouvert par un cache-écrou 10, articulé en bout de l'extrémité 1a.

Il est clair, qu'après ce qui vient d'être décrit, les extrémités 1a et 2a sont disposées l'une au dessus de l'autre et sont fixées de manière solidaire sur le même axe d'entrainement 5.

Les extrémités 1a et 2a des bras se prolongent par des extensions 1b et 2b qui portent chacune à son extrémité libre et de manière classique un balai ou raclette 11 et respectivement 12.

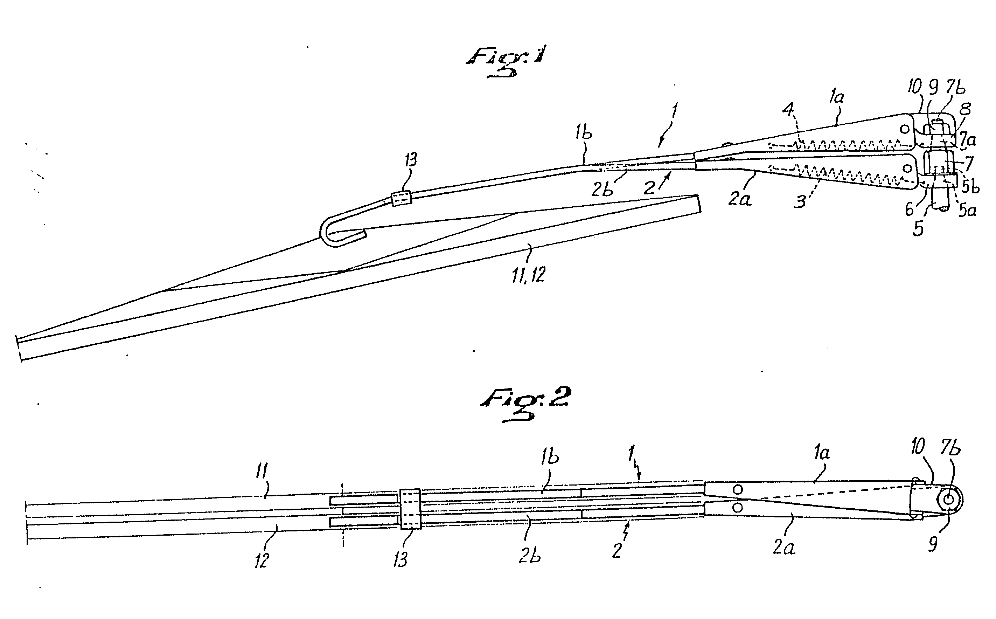

Les extrémités 1a et 2a font entre elles des angles aigus dans les plans de projection des figures 1 et 2.

Les cambrures des extensions 1b et 2b sont telles que ces dernières sont sensiblement superposées sur une grande partie de leur longueur, dans le plan de la figure 1.

En outre, l'extension 1b du bras supérieur 1 présente un léger coude par rapport à l'extrémité 1a vers l'extension 2b, de manière telle que les extensions 1b et 2b soient sensiblement parallèles dans le plan de la figure 2.

De cette manière, il est clair que les raclettes 11 et 12 peuvent être disposées sensiblement parallèles, tout en restant parfaitement indépendantes.

Une entretoise 13, en matière souple, est en outre aménagée entre les extensions 1b et 2b des bras 1 et 2.

Le mode de réalisation décrit, outre les avantages spécifiques de l'invention permet une adaptation sur n'importe quel véhicule, muni en série d'un ou de deux essuie-glaces.

En outre, il est possible de conserver le ou les essuie-glaces d'origine et d'adapter à chacun d'eux un deuxième bras, au dessus ou au dessous, au moyen du prolongateur 7.

**Revendications**

1. Essuie-glace double pour véhicule, à deux bras distincts (1, 2) munis chacun de son propre moyen de pression (4, 3) et d'un balai ou raclette (11, 12) assujetti sur son extrémité libre, comportant des moyens d'accouplement (7) destinés à permettre de fixer solidairement l'une au-dessus de l'autre les extrémités de fixation (1a, 2a) portant les moyens de pression (4, 3) des deux bras (1, 2) sur le même axe d'entrainement (5) dépendant du véhicule, caractérisé en ce que la forme des bras est telle que lesdites extrémités de fixation (1a, 2a) sont légèrement décalées l'une par rapport à l'autre et dans deux plans perpendiculaires, de manière telle que, les raclettes (11, 12) se déplacent conjointement, parallèlement l'une à l'autre, avec un écartement sensiblement constant.

2. Essuie-glace selon la revendication 1, caractérisé en ce qu'en position de service les extrémités de fixation (1a, 2a) font entre elles un angle aigu selon un plan de projection contenant l'axe d'entrainement (5), les cambrures des bras étant telles que les extrémités pourvues de raclettes se confondent substantiellement dans le dit plan de projection.

3. Essuie-glace selon la revendication 2, caractérisé en ce que l'axe longitudinal d'au moins l'un des bras (1) présente, dans un plan de projection perpendiculaire à l'axe d'entrainement (5), un léger coude vers l'autre bras (2), de manière telle que les dits bras soient, sur une bonne partie de leur longueur, substantiellement parallèles dans le dit plan de projection.

4. Essuie-glace selon l'une quelconque des revendications 1 à 3, caractérisé en ce qu'au moins une entretoise (13) est disposée entre les deux bras (1, 2) et/ou les deux raclettes (11, 12) de manière à leur assurer un écartement invariable.

5. Essuie-glace selon l'une quelconque des revendications 1 à 4, caractérisé en ce que l'élément d'accouplement des bras est un prolongateur d'axe (7) disposé entre les deux extrémités de fixation (1a, 2a) des bras, de manière à permettre, notamment, l'adaptation d'un bras complémentaire sur le bras d'origine du véhicule à équiper.

6. Essui-glace selon la revendication 5, caractérisé en ce que le prolongateur d'axe (7) présente, à l'une de ses extrémités, un taraudage destiné à être vissé en bout (5b) de l'axe d'entrainement (5), pour fixer le bras inférieur (2), tandis que l'autre extrémité est pourvue d'une portée conique cannelée (7a) et d'un filetage extérieur (7b) pour respectivement caler et fixer le bras supérieur (1) de manière classique avec un écrou (9).

**Patentansprüche**

1. Doppelter Scheibenwischer für Fahrzeug, mit zwei verschiedenen Armen (1, 2), wobei jeder Arm mit seinem eigenen Anpressungsmittel (4, 3) und mit einem auf seinem freien Ende befestigten Wischblatt oder Abstreifer (11, 12) versehen ist, und Kupplungsmittel (7) vorgesehen sind, die dazu bestimmt sind, die gemeinsame Befestigung der die Anpressungsmittel (4, 3) tragenden Befestigungsenden (1a, 2a) der beiden Arme (1, 2) übereinander auf eine und dieselbe zum Fahrzeug gehörige Antriebeswelle (5) zu ermöglichen, dadurch gekennzeichnet, dass die Arme so geformt sind, dass die genannten Befestigungsenden (1a, 2a) in zwei zueinander senkrechten Projectionsebenen im Verhältnis zueinander derart leicht verschoben sind, dass die Abstreifer (11, 12) sich zusammen, parallel zueinander und mit einem im wesentlichen gleichmässigen Abstand bewegen.

2. Scheibenwischer nach Anspruch 1, dadurch gekennzeichnet, dass in Betriebslage und in einer die Antriebswelle (5) enthaltenden Projektionsebene die Befestigungsenden (1a, 2a) einen spitzen Winkel mit einander bilden, wobei die Arme eine solche Schweifung aufweisen, dass in der genannten Projektionsebene die mit den Abstreifern versehenen Enden im wesentlichen zusammenfallen.

3. Scheibenwischer nach Anspruch 2, dadurch gekennzeichnet, dass in einer Projectionsebene senkrecht zur Antriebswelle mindestens einer (1) von den Armen eine leichte Biegung seiner Längsachse gegen den anderen Arm (2) aufweist, derart, dass entlang eine erhebliche Partie ihrer Länge die genannten Arme in der genannten Projektionsebene im wesentlichen parallel sind.

4. Scheibenwischer nach einem der Ansprüche 1 bis 3, dadurch gekennzeichnet, dass mindestens ein Querstück (13) zwischen den beiden Armen (1, 2) und/oder den beiden Abstreifern (11, 12) angeordnet ist, um einen unveränderlichen Abstand dazwischen sicherzustellen.

5. Scheibenwischer nach einem der Ansprüche 1 bis 4, dadurch gekennzeichnet, dass das Kupplungsglied der Arme ein Wellenverlängerungsstück (7) ist, das zwischen den beiden Befestigungsenden (1a, 2a) der Arme derart angeordnet ist, dass besonders das Anbringen von einem zusätzlichen Arm auf den ursprünglichen Arm des auszurüstenden Fahrzeuges ermöglicht wird.

6. Scheibenwischer nach Anspruch 5, dadurch gekennzeichnet, dass das Wellenverlängerungstück (7) an einem Ende ein Gewindebohren aufweist, das zum Anschrauben auf das Ende (5b) der Antriebswelle (5) für das Befestigen des unteren Armes (2) bestimmt ist, während das andere Ende mit einem kegelförmigen, geriffelten Zapfen (7a) und mit einem äusseren Gewinde (7b) versehen ist, die zum Einstellen bzw. Befestigen des oberen Armes in üblicher Weise mittels eine Schraubenmutter (9) dienen.

**Claims**

1. Double windshield wiper for a vehicle, with two separate arms (1, 2) each provided with its own pressure means (4, 3) and a wiper blade or squeegee (11, 12) attached to its free end, comprising coupling means (7) intended to allow the mounting ends (1a, 2a) carrying the pressure means (4, 3) of the two arms (1, 2) to be jointly mounted, one above the other, on one and the same driving shaft (5) of the vehicle, characterized in that the shape of the arms is such that said mounting ends (1a, 2a) are slightly displaced relative to each other in two planes at right angles to each other in such a manner, that the squeegees (11, 12) move together in parallel with each other and with a substantially constant separation.

2. A windshield wiper according to claim 1, characterized in that in the position of use the mounting ends (1a, 2a) form between them an acute angle in a plane of projection containing the driving shaft (5), the camber of the arms being such, that the ends provided with the squeegees substantially coincide in said plane of projection.

3. A windshield wiper according to claim 2, characterized in that in a plane of projection perpendicular to the driving shaft (5) the longitudinal axis of at least one of the arms (1) exhibits a slight bend towards the other arm (2) in such a manner, that in said plane of projection said arms are substantially parallel along a considerable portion of their lengths.

4. A windshield wiper according to any of claims 1—3, characterized in that at least one crosspiece (13) is disposed between the two arms (1, 2) and/or the two squeegees (11, 12) in a manner to ensure an unvarying spacing between them.

5. A windshield wiper according to any of claims 1—4, characterized in that the coupling element for the arms is a shaft extension (7) disposed between the two mounting ends (1a, 2a) of the arms in a manner to allow, especially, the adaptation of a supplementary arm on the original arm of the vehicle to be equipped.

6. A windshield wiper according to claim 5, characterized in that the shaft extension (7) exhibits, at one of its ends, a threaded bore intended to be screwed onto the end (5b) of the driving shaft (5) for securing the lower arm (2), whereas the other end is provided with a splined, conical boss (7a) and an external threading (7b) for respectively positioning and securing the upper arm (1) in conventional manner with a nut (9).

*Fig.1*

*Fig.2*

0 017 576